# EUROPEAN PATENT APPLICATION

(11) **EP 1 619 882 A2**
(43) Date of publication of application: **25.01.2006**
(21) Application number: 05105689.3
(22) Date of filing: 24.06.2005
(51) Int. Cl.: H04N 5/232

(54) **A camera apparatus**

(30) Priority: 19.07.2004 KR 2004056001
(71) Applicant: SAMSUNG ELECTRONICS CO., LTD., Suwon-si, Gyeonggi-do 442-742 (KR)
(72) Inventor: Hong, Sung-bin, 435-1.201, Kkonme-maeul, Jukjeon 1-dong, Yongin-si, Gyeonggi-do (KR)
(74) Representative: Geary, Stuart Lloyd

(57) **Abstract**

Provided are an auto-stabilization method of controlling driving an image pickup device and reading a memory, and a photographing apparatus having the auto-stabilization method. The photographing apparatus includes an image pickup device photographing an optical image of an object focused on an optical surface including an effective pixel area and a reserved pixel area of predetermined size prepared outside the effective pixel area to generate an image signal. An image pickup device driver drives the image pickup device to output an image signal generated in a pixel area greater than the effective pixel area. A signal processor performs predetermined signal processing on the image signal output from the image pickup device. A memory stores the image signal that has undergone the predetermined signal processing in the unit of field. An auto-stabilizer produces an auto-stabilized area using the image signal stored in the memory.

## Description

The present invention relates to a camera apparatus operable in a normal mode and an anti-shake mode, the apparatus comprising an image sensor, shake detection means for outputting a signal indicative of shake applied to the camera apparatus when operating in the anti-shake mode, memory means for storing the image data from the image sensor, and a control means configured to write the image data to memory and to read the image data from the memory for output.

When a photographer uses a photographing apparatus, the photographing apparatus shakes due to the shaking of the user's hand. This results in the shaking of the photographed image.

Accordingly, the photographing apparatus automatically detects and stabilises hand shaking so that the photographed image is clear and without being shaken. This function is called auto-stabilization (AS). The AS function includes the process of detecting and correcting for hand shaking.

A currently used AS method may be classified as either digital image stabilization (DIS), electrical image stabilization (EIS), or optical image stabilization (OIS).

In the DIS method, hand shaking is detected and stabilized using an image signal stored in a memory. To correct the hand shaking, a motion vector is detected using the image signal generated by an image pickup device which is stored in a memory. Then the reading timing of the memory is changed using the detected motion vector.

Using to the DIS method, the AS function may be simply realised. However, the size of an image that can be read from the memory by the changed reading timing is equal to a size of an effective pixel area. Thus, the read image must be magnified using a digital zoom and then reproduced and/or recorded. As a result of the digital zoom, the quality of the reproduced and/or recorded image is deteriorated.

In the EIS method, hand shaking is detected and stabilized using an angular velocity sensor and a high definition pixel image pickup device. Specifically, the speed and direction of hand shaking is detected using a horizontal and vertical angular velocity sensor. Next, hand shaking is corrected by changing the timing of the output from the high definition pixel image pickup device compensating for the detected speed and direction of hand shaking.

In the case of the EIS method, the size of the image represented by an image signal output from the high definition pixel image pickup device changed by the output timing is equal to a size of an original image. This is because the total number of pixels is much larger than the number of effective pixels in the high definition pixel image pickup device used in the EIS method. Thus, by using to the EIS method, the quality of a reproduced and/or recorded image is not deteriorated. However, the angular velocity sensor and the high definition pixel image pickup device are required to perform the EIS method. This causes manufacturing costs to be increased.

The OIS method detects and stabilizes hand shaking using an angular velocity sensor and a prism. The OIS method is the same as the EIS method in that the speed and direction of hand shaking is detected using a horizontal and vertical angular velocity sensor. However, the OIS method is different from the EIS method in that the prism is used to change the path of the light incident on the image pickup device when stabilizing hand shaking.

In the OIS method, the quality of a reproduced and/or recorded image is not deteriorated, and a high definition pixel image pickup device is not required. However, since the angular velocity sensor and the prism are required to perform the OIS method, the size and manufacturing costs of the photographing apparatus increases. In addition, it is difficult to control the prism.

Accordingly, a need exists for an improved auto-stabilization method for a photographing apparatus. This method should substantially reduce the deterioration of pictures due to the shaking of the photographing apparatus.

Accordingly, an aspect of the present general inventive concept is to provide an AS method of minimizing a deterioration of the quality of a photographed image without using an angular velocity sensor, a prism, and a high pixel image pickup device that causes manufacturing unit costs of a photographing apparatus to increase and the photographing apparatus having the same.

The present invention relates to a camera apparatus operable in a normal mode and an anti-shake mode, the apparatus comprising an image sensor, shake detection means for outputting a signal indicative of shake applied to the camera apparatus when operating in the anti-shake mode, memory means for storing the image data from the image sensor, and a control means configured to write the image data to memory and to read the image data from the memory for output.

A camera apparatus according to the present invention is characterised in that the region of the image data being read in anti-shake mode is determined in accordance with the signal output from the shake detection means, the region output when the apparatus operates in normal mode having substantially the same dimensions as when operating in anti-shake mode.

Other additional and/or preferred features are set forth in claims 2, 3 and 4 appended hereto.

An embodiment of the present invention will now be described, by way of example only, and with reference to the accompanying drawings, in which:
Figure 1 is a block diagram of a photographing apparatus for stabilizing hand shaking in the control of driving an image pickup device and reading a memory according to an embodiment of the present invention;
Figure 2A illustrates an optical surface of a Charge Coupled Device (CCD);
Figure 2B is a timing diagram of a CCD drive pulse for outputting an image signal generated in an effective pixel area of the CCD;
Figure 2C is a timing diagram of a CCD drive pulse for outputting an image signal generated in a whole pixel area (including the effective pixel area and a reserved pixel area) of the CCD;
Figure 3A illustrates a memory storing the image signal generated in the whole pixel area of the CCD;
Figure 3B illustrates an auto-stabilized area to be read from the memory; and
Figure 4 is a flowchart of an AS method realised by controlling the driving of an image pickup device and reading a memory according to an embodiment of the present invention.

Throughout the drawings, like reference numerals will be understood to refer to like parts, components and structures.

The matters defined in the description, such as a detailed construction and elements thereof, are provided to assist in a comprehensive understanding of the invention. Thus, it is apparent that the present invention may be carried out without those defined matters. Also, well-known functions or constructions are omitted in detail to provide a clear and concise description of the embodiments of the present invention.

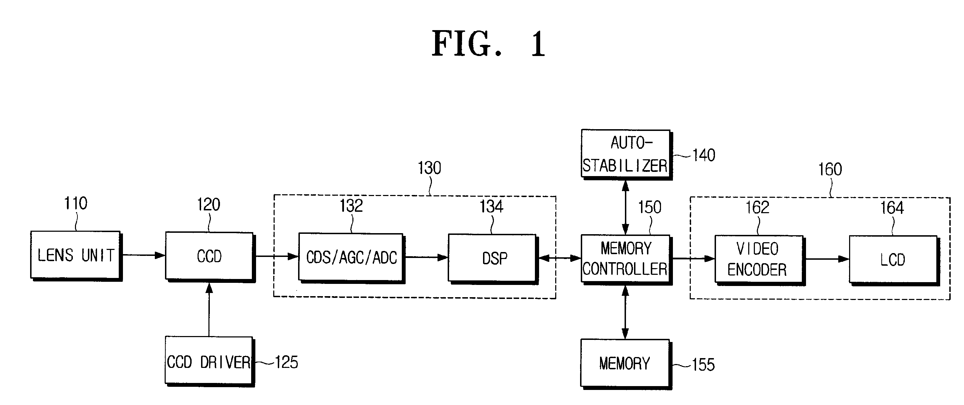

Referring to Figure 1, the photographing apparatus includes a lens unit 110, a CCD 120, a CCD driver 125, a signal processor 130, an auto-stabilizer 140, a memory controller 150, a memory 155, and a display unit 160.

The lens unit 110 focuses an optical image of an object onto an optical surface of the CCD 120.

The CCD 120 is an image pickup device that captures the optical image of the object focused on the optical surface by generating an image signal representing the optical image. The photographing apparatus of the present invention may use a Metal Oxide Semiconductor (MOS) type image pickup device instead of the CCD 120.

The CCD driver 125 controls the CCD 120 so that the image signal generated by the CCD 120 is output to the signal processor 130. The CCD driver 125 applies a CCD drive clock to the CCD 120 so that the CCD 120 outputs the image signal. The pixel area on the optical surface of the CCD 120 and the size of the pixel area are determined depending on the CCD drive clock.

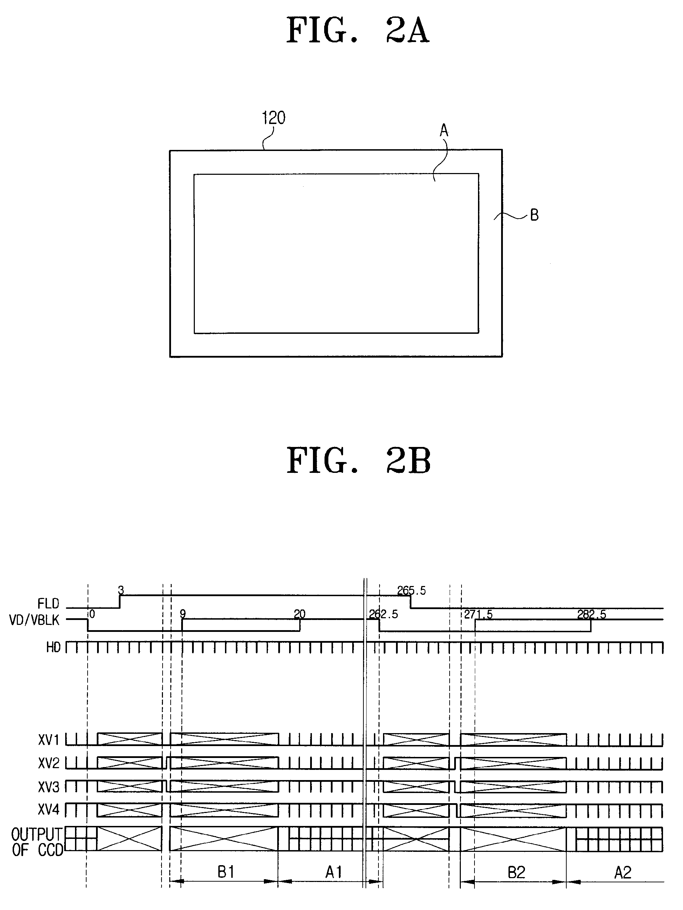

Control of the CCD 120 will now be described in detail with reference to Figures 2A to 2C. Figure 2A illustrates the optical surface of the CCD 120. Referring to Figure 2A, the optical surface of the CCD 120 includes an effective pixel area A and a reserved pixel area B of a predetermined size located outside of the effective pixel area A.

Conventionally, the CCD driver 125 drives the CCD 120 to output only an image signal generated in the effective pixel area A. Figure 2B is a timing diagram of the CCD drive clock that the CCD driver 125 applies to the CCD 120. Timings of a field clock FLD, a vertical synchronizing/vertical blacking clock VD/VBLK, a horizontal synchronizing clock HD, and vertical transmission clocks XV1 to XV4 which the CCD drive clock of the CCD driver 125 applies to the CCD 120 are shown in Figure 2B. The timing of the output from the CCD 120 is also shown at the lowermost part of the timing diagram shown in Figure 2B.

As shown in Figure 2B, since the CCD driver 125 does not apply the vertical transmission clocks XV1 to XV4 to the CCD 120 in sections B1 and B2, there is no output from the CCD 120 in sections B1 and B2. The CCD 120 does not output the image signal during sections B1 and B2 but outputs the image signal only in sections A1 and A2. Thus, only the image signal generated in the effective pixel area A of the CCD 120 is output to the signal processor 130, and the image signal generated in the reserved pixel area B of the CCD 120 is not output to the signal processor 130. Conventionally, the image signal generated in the reserved pixel area B of the CCD 120 is not used.

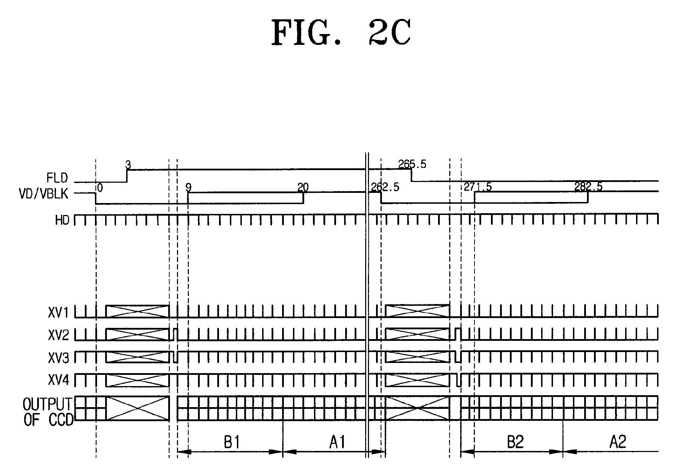

However, in the present invention, the CCD driver 125 drives the CCD 120 to output the image signal generated in the reserved pixel area B as well as the image signal generated in the effective pixel area A. Figure 2C is a timing diagram of the CCD drive clock that the CCD driver 125 applies to the CCD 120.

As shown in Figure 2C, since the CCD driver 125 applies the vertical transmission clocks XV1 to XV4 to the CCD 120 in sections B1 and B2 as well as in the sections A1 and A2, the CCD 120 outputs the image signal even in the sections B1 and B2. Thus, the image signals generated in the effective and reserved pixel areas A and B of the CCD 120 are output to the signal processor 130. As a result, the image signal generated in the reserved pixel area B of the CCD 120 is also used. The image signal generated in the reserved pixel area B of the CCD 120 is used for AS. This will be described in more detail below.

Referring to Figure 1 again, the signal processor 130 performs predetermined signal processing on the image signal output from the CCD 120. The signal processor 130 includes a correlated double sampling circuit (CDS)/auto gain controlling circuit (AGC)/analogue-to-digital converter (ADC) 132 and the DSP 134.

The CDS/AGC/ADC 132 removes noise from the image signal output from the CCD 120 using a CDS, adjusts the gain using an AGC to maintain a uniform level of the image signal and converts the image signal into a digital image signal using an ADC. The DSP 134 performs signal processing, such as auto white balance (AWB) on the digital image signal output from the CDS/AGC/ADC 132.

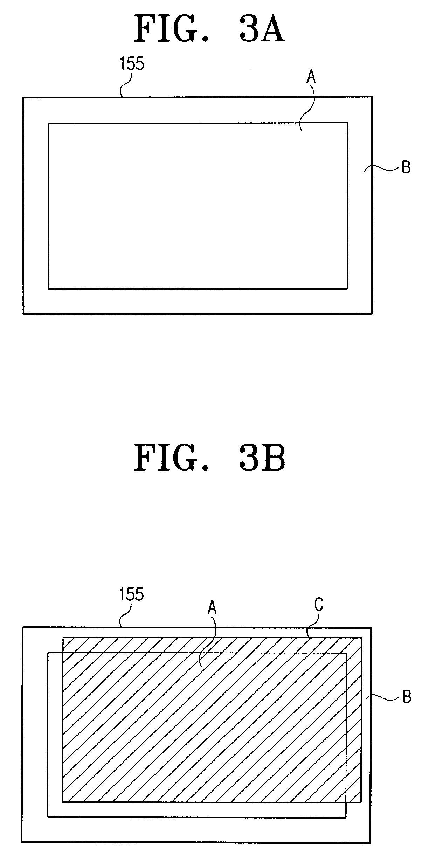

The memory controller 150 stores the image signal output from the DSP 134 in the memory 155 as "fields". Since the image signal output from the CCD 120 is the image signals generated in the effective and reserved pixel areas A and B, the image stored in the memory 155 is an image photographed in the whole pixel area (including the effective and reserved pixel areas A and B) as shown in Figure 3A. Figure 3A illustrates the memory 155 storing the image signal generated in the whole pixel area of the CCD 120.

Thereafter, the memory controller 150 reads the image signal from the memory 155 and applies the image signal to the auto-stabilizer 140.

The auto-stabilizer 140 detects hand shaking using the image signal applied from the memory controller 150. The auto-stabilizer 140 compares fields of the applied image signal to detect the amount and direction of hand shaking. The auto-stabilizer 140 also produces an auto-stabilized area based on the detected speed and direction of hand shaking. The size of the auto-stabilized area is substantially equal to the size of the effective pixel area A. Figure 3B illustrates an example of the auto-stabilized area (marked with slanted lines), which is denoted by reference character C.

The auto-stabilizer 140 applies information relating to the auto-stabilized area to the memory controller 150.

The memory controller 150 reads an image signal corresponding to the auto-stabilized area from the memory 155 and applies the read image signal to the display unit 160.

The memory controller 150 reads the image signal corresponding to the auto-stabilized area C of areas shown in Figure 3B from the memory 155 and applies the read image signal to the display unit 160. Since the size of the auto-stabilized area C is substantially equal to the size of the effective pixel area A, the size of the image signal read by the memory controller 150 is also substantially equal to the size of the effective pixel area A.

The display unit 160 reproduces the image signal read by the memory controller 150. The display unit 160 includes a video encoder 162 and a liquid crystal display (LCD) 164.

The video encoder 162 converts the image signal output from the memory controller 150 into an image signal that is reproduced by the LCD 164. The LCD 164 is a display device that displays the image signal converted by the video encoder 162.

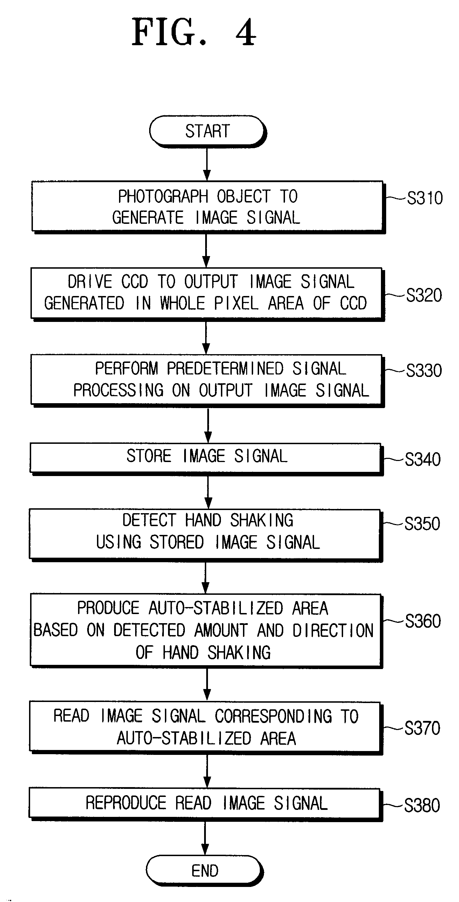

An AS method of controlling the driving of the CCD 120 and reading the memory 155 in the photographing apparatus shown in Figure 1 will now be described in detail with reference to Figure 4. Figure 4 is a flowchart of an AS method including controlling the driving of an image pickup device and the reading of a memory, according to an exemplary embodiment of the present invention. Referring to Figure 4, in step S310, the CCD 120 captures the optical image of the object focused on the optical surface to produce the image signal representing the optical image.

In step S320, the CCD driver 125 drives the CCD 120 to output the image signal generated in the whole pixel area of the CCD 120 to the signal processor 130. The CCD driver 125 applies the CCD drive clock as shown in Figure 2C to the CCD 120 so that the CCD 120 outputs the image signals generated in the effective and reserved pixel areas A and B.

In step S330, the signal processor 130 performs the predetermined signal processing on the image signal output from the CCD 120.

In step S340, the memory controller 150 stores the image signal output from the signal processor 130 in the memory 155 as "fields". Since the image signal output from the CCD 120 is the image signal generated in the whole pixel area (including the effective and reserved pixel areas A and B), the image stored in the memory 155 is also the image photographed in the whole pixel area of the CCD 120. The image of the whole pixel area of the CCD 120 as shown in Figure 3A is stored.

In step S350, the auto-stabilizer 140 detects hand shaking using the image signal stored in the memory 155. The auto-stabilizer 140 receives the image signal stored in the memory 155 from the memory controller 150 and compares the fields of the received image signal to the stored image to detect the amount and direction of hand shaking.

In step S360, the auto-stabilizer 140 produces the auto-stabilized area based on the speed and direction of hand shaking. The auto-stabilizer 140 also applies the information as to the auto-stabilized area to the memory controller 150.

In step S370, the memory controller 150 reads the image signal corresponding to the auto-stabilized area from the memory 155 using the information as to the auto-stabilized area and applies the read image signal to the display unit 160. The memory controller 150 reads the image signal corresponding to the auto-stabilized area C of the areas shown in Figure 3B from the memory 155 and applies the read image signal to the display unit 160.

In step S380, the display unit 160 reproduces the image signal read by the memory controller 150. In addition, the image signal read by the memory controller 150 may be compressed in a predetermined format and then recorded in a recording medium (not shown).

When the camera apparatus is not operating in the anti-shake mode, a predetermined central portion of the stored image is read out from the memory. Thus, in this case, the outer portion of the stored image (the reserved area) is not read out from memory and displayed.

An improved AS method of controlling driving the CCD 120 and reading the memory 155 has been described. It has been described in an exemplary embodiment that the CCD driver 125 drives the CCD 120 to output the image signal generated in the whole pixel area of the CCD 120. However, the present invention is not necessarily limited to this. The CCD drivers 125 drive the CCD 120 to output only an image signal generated in a pixel area (a portion of the effective and reserved pixel areas A and B) greater than the effective pixel area A of the CCD 120 and smaller than the whole pixel area of the CCD 120. Here, hand shaking may be detected and corrected using the image signal output from the CCD 120.

Also, the present invention may be applied to a digital camera, digital camcorder, a monitoring camera such as a closed circuit television (CCTV), a camera built in a mobile phone, or other photographing apparatuses.

As described above, according to the present invention, the size of an image that is read from the memory is equal to the size of the whole pixel area (including effective and reserved pixel areas) of an image pickup device. Thus, digital zooming is not required. As a result, the quality of a reproduced and/or recorded image is not deteriorated. Also, an angular velocity sensor, a prism, and a high definition pixel image pickup device are not used. Thus, manufacturing unit costs of a photographing apparatus are lowered.

The foregoing embodiment and advantages are merely exemplary. The present teaching may be readily applied to other types of apparatuses. Also, the description of the embodiments of the present invention is intended to be illustrative, and many alternatives, modifications, and variations will be apparent to those skilled in the art.

## Claims

1. A camera apparatus operable in a normal mode and an anti-shake mode, the apparatus comprising an image sensor (120), shake detection means (140) for outputting a signal indicative of shake applied to the camera apparatus when operating in the anti-shake mode, memory means (155) for storing the image data from the image sensor, and a control means (150) configured to write the image data to the memory means (155) and to read the image data from the memory (155) for output **characterised in that** the region of the image data being read in anti-shake mode is determined in accordance with the signal output from the shake detection means (140) and the region output when the apparatus operates in normal mode having substantially the same dimensions as when operating in anti-shake mode.

2. A camera apparatus according to claim 1, wherein when operating in the normal mode, the region output from the memory (155) is predetermined.

3. A camera apparatus according to claim 2, wherein the predetermined region corresponds to an area located about substantially the centre of the image sensor (120).

4. A camera apparatus according to any one of claims 1, 2 or 3, wherein the control means (150) is configured to read and/or write image data representing substantially the whole image sensor to and/or from the memory (155).

5. A photographing apparatus, comprising:
an image pickup device for photographing an optical image of an object focused on an optical surface having an effective pixel area and a reserved pixel area of predetermined size prepared outside the effective pixel area to generate an image signal;
an image pickup device driver for driving the image pickup device to output an image signal generated in a pixel area greater than the effective pixel area;
a signal processor performing predetermined signal processing on the image signal output from the image pickup device;
a memory storing the image signal that has undergone the predetermined signal processing in the unit of field; and
an auto-stabilizer producing an auto-stabilized area using the image signal stored in the memory.

6. The photographing apparatus of claim 5, wherein
a memory controller reads an image signal corresponding to the auto-stabilized area from the memory; and
a display unit reproduces the image signal read by the memory controller.

7. The photographing apparatus of claim 5, wherein
the image pickup device drives the image pickup device to output image signals generated in the effective and reserved pixel areas.

8. The photographing apparatus of claim 5, wherein
the image pickup device is one of a charge coupled device and a metal oxide semiconductor type image pickup device.

9. The photographing apparatus of claim 8, wherein
the image pickup device is used in one of a digital camera, a digital camcorder, a monitoring camera, and a camera built in a mobile phone.

10. The photographing apparatus of claim 5, wherein
the signal processor has a correlated double sampling circuit (CDS)/auto gain controlling circuit (AGC)/analog-to-digital converter (ADC) 132 to facilitate signal processing.

11. The photographing apparatus of claim 10, wherein
the signal processor has a digital signal processor to facilitate signal processing.

12. The photographing apparatus of claim 7, wherein
the image pickup device drives the image pickup device to output image signals generated in substantially the entire effective and reserved pixel areas.

13. The photographing apparatus of claim 6, wherein
the display unit has a video encoder to facilitate converting the image signal.

14. The photographing apparatus of claim 13, wherein
the display unit has a liquid crystal display to display the converted image signal.

15. An auto-stabilization method for a photographing apparatus having an image pickup device photographing an optical image of an object focused on an optical surface having an effective pixel area and a reserved pixel area of predetermined size prepared outside the effective pixel area to generate an image signal, the auto-stabilization method comprising the steps of
driving the image pickup device to output an image signal generated in a pixel area greater than the effective pixel area;
performing predetermined signal processing on the image signal output from the image pickup device;
storing the image signal that has undergone the predetermined signal processing in the unit of field; and
producing an auto-stabilized area using the stored image signal.

16. The auto-stabilization method of claim 15, further comprising:
reading an image signal corresponding to the auto-stabilized area; and
reproducing the read image signal.

17. The auto-stabilization method of claim 15, wherein
the image pickup device is driven to output image signals generated in the effective and reserved pixel areas.

18. The auto-stabilization method of claim 15, wherein
the image pickup device is one of a charge coupled device and a metal oxide semiconductor type image pickup device.

19. The auto-stabilization method of claim 15, wherein
the photographing apparatus is one of a digital camera, a digital camcorder, a monitoring camera, and a camera built in a mobile phone.

20. An auto-stabilization method for a photographing apparatus, comprising:
focusing an optical image corresponding to an image to be photographed on an optical surface having a pixel area;
generating a first image signal corresponding to the optical image on the optical surface;
outputting the first image signal to a signal processor;
storing the outputted first image signal;
detecting shaking of the photographing apparatus by analyzing the stored first image signal;
producing an auto-stabilized area based on the amount of detected shaking;
reading a second image signal corresponding to the auto-stabilized area; and
reproducing the second image signal on a display unit.

21. An auto-stabilization method for a photographing apparatus according to claim 20, further comprising
focusing an optical image on a charge coupled device.

22. An auto-stabilization method for a photographing apparatus according to claim 20, further comprising
focusing an optical image on a metal oxide semiconductor pickup device.

23. An auto-stabilization method for a photographing apparatus according to claim 20, further comprising
generating a first image signal corresponding to the optical image of the entire pixel area of the optical surface.

24. An auto-stabilization method for a photographing apparatus according to claim 20, further comprising
performing predetermined signal processing on the outputted first image signal.
